# EUROPEAN PATENT SPECIFICATION

(11) **EP 2 941 601 B1**
(45) Date of publication and mention of the grant of the patent: **04.09.2019**
(21) Application number: 14703154.6
(22) Date of filing: 07.01.2014
(51) Int. Cl.: F24H 8/00

(54) **CONDENSING BOILER**
KONDENSATIONSKOCHVORRICHTUNG
CHAUDIÈRE À CONDENSATION

(30) Priority: 07.01.2013 GB 201300222
(43) Date of publication of application: 11.11.2015
(73) Proprietor: Ideal Boilers Limited, Kingston-Upon-Hull East Yorkshire HU5 4JN (GB)
(72) Inventor: BIELBY, Graham, Preston East Yorkshire HU12 8UQ (GB)
(74) Representative: Wilson Gunn
(86) International application number: PCT/GB2014/050036
(87) International publication number: WO 2014/106758

(56) References cited:
- EP-A1- 2 175 209
- EP-A2- 0 127 939
- DE-A1- 10 119 254

## Description

This invention relates to condensing boilers and methods of discharging fluid from a condensing boiler through a pressure relief valve.

Condensing boiler assemblies are known which include a burner for burning a fuel or a mixture of fuel and air to generate heat, and one or more heat exchangers to transfer the heat generated to a fluid travelling through a fluid circuit. The products of combustion, including water vapour, carbon dioxide and other gases are vented through a flue system which may include an external flue pipe. A fan is used to generally pass the flue gases from the burner through the heat exchanger and as the gases pass over the heat exchanger, water vapour in the combustion gases condenses. The condensation of the water vapour on the heat exchanger enables recovery of some of the latent heat, and the condensing boiler is therefore more efficient than non-condensing boilers. Many condensing boilers are connected to domestic or commercial central heating sealed systems, and these systems require a pressure relief safety valve, or pressure relief valve (PRV). If the pressure of the central heating system reaches a certain level the pressure relief valve will open and discharge fluid out of the system to bring the pressure down. The reader is referred to DE10119254 (A1) and EP2175209 A1.

On many condensing boilers it is current practice to incorporate the components for a sealed central heating system within the boiler casing. The pressure relief valve is commonly fitted to one of the water manifolds, either the water inlet or water outlet emerging from the boiler casing. A pipe is fitted to the outlet of the pressure relief valve and routed through the casing to provide a point of connection for a service engineer or installer. The service engineer or installer needs to connect the outlet of the pressure relief valve to a drain with additional pipework and run this pipework through an external wall. An exit point is then created with fittings to enable discharge of fluid at a terminal against the wall, rather than to allowing the water spray out into the atmosphere, in order to minimise the risk of discharging hot water onto people in the vicinity of the terminal.

Attempts have been made to move the pressure relief valve outlet to evacuate directly into the water vapour condensate drainpipe within the boiler, by connecting the pressure relief valve outlet through additional pipework within the boiler. These attempts have resulted in pressure relief valves connected to condensate drainpipes, with no ability to determine whether the pressure relief valve is discharging. Small leaks, and weeping, from pressure relief valves are a known problem and to diagnose and view these leaks, it is important that the pressure relief valve outlet is visible to a service engineer or installer. An attempt has been made to overcome this problem by the addition of a tundish to a condensate trap external to the boiler, but there is a risk that combustion products could escape from the tundish, if the condensate trap is fitted incorrectly or is not filled with liquid.

It is therefore an aim of embodiments of the present invention to provide an improved condensing boiler pressure relief valve assembly that overcomes or at least mitigates a problem of the prior art pressure relief valve assemblies.

It is a further aim of embodiments of the present invention to provide a condensing boiler comprising a pressure relief valve assembly that overcomes the disadvantages of known condenser boilers.

In accordance with the invention there is provided a condensing boiler comprising the features of claim 1.

The heat exchanger may comprise a single heat exchanger. The heat exchanger may comprise a first heat exchanger for extraction and transfer of heat from combustion products to the fluid circuit, and a second heat exchanger for extracting latent heat from combustion products. The fluid is generally water, and water vapour may condense on, or in the vicinity, of the first and/or second heat exchanger.

In one embodiment the pressure relief valve is connected to the fluid inlet of the fluid circuit, whilst in other embodiments the pressure relief valve is connected to the fluid outlet of the fluid circuit. The pressure relief valve may be connected to the fluid inlet or fluid outlet directly or indirectly, for example by way of a connecting pipe. In some embodiments the pressure relief valve is located adjacent to a connector on the heat exchanger and coupled to the fluid circuit and sump, preferably at the point where the fluid circuit enters the heat exchanger. The pressure relief valve may comprise an exhaust port directly or indirectly coupled to the sump.

In one embodiment the exhaust port is directly coupled to the sump, and in other embodiments the exhaust port is coupled to the sump indirectly through pipework.

The sump may be connected to a condensate trap and a condensate outlet. The condensate outlet may be connected to a waste or soil drainpipe, or to a soakaway external to the condensing boiler. The sump comprises a detachable cover plate, which may be removed by a service engineer in order to check for fluid egress from the pressure relief valve. In other embodiments the cover plate comprises apertures or is at least partially transparent, so that the interior of the sump can be viewed from outside the sump. It is intended to use only one sump.

The siting of a pressure relief valve coupled to the fluid circuit and sump enables the pressure relief valve to discharge within the condensing boiler in which the sump is located, without the need for a separate pressure relief valve discharge pipe and associated pipework outside of the boiler, and without the need for a separate tundish or other component, which may create a risk of combustion products leaking from the boiler. The ability for a service engineer to quickly check the sump for fluid egress from the pressure relief valve also reduces the likelihood that leakage, or another fault, in the pressure relief valve will be missed. The use of an internal pressure relief valve which can be coupled directly to the fluid circuit and sump also enables a low component count, no superfluous external or internal connections for a service engineer or installer, and no requirement for a separate pressure relief valve exhaust pipe out of the condensing boiler. Furthermore, the condensing boiler according to the present invention provides for a condensate discharge which includes no breaks, or extra joins created by connection to a pressure relief valve.

The pressure relief valve may be any suitable valve, such as a springloaded pressure relief valve designed to open to relieve excess pressure, and reclose and prevent further flow of fluid after normal conditions have been restored, for example.

The condensing boiler assembly may further comprise control means configured to control discharge of condensate from the condensate trap and condensate discharge pipe. The control means may comprise a means for detecting the level of condensate in the trap and a means for activating a pump or other means, when the condensate reaches a threshold level. The control means may comprise a float-switch, or a level sensing switch, although any suitable control means may be used. In an alternative embodiment the control means is operated so that the condensate trap is discharged periodically, and may be configured so that the trap is only discharged whilst the boiler is active.

The condensing boiler assembly may further comprise control means configured to inhibit or prevent operation of the condensing boiler in the event that the pressure relief valve is actuated, or a fault is detected in the pressure relief valve.

The pressure relief valve assembly for the condensing boiler of the invention may comprise a pressure relief valve, a fluid circuit connector for connecting to a fluid circuit of a condensing boiler and a sump connector for connecting to a sump of a condensing boiler.

The pressure relief valve assembly may comprise a fluid inlet conduit extending from a fluid circuit connector. The pressure relief valve may comprise a first fluid outlet conduit connected to a fluid circuit connector, and a second fluid outlet conduit connected to a sump connector. The pressure relief valve may include one or more switches configured to allow or prevent flow of fluid through the fluid inlet conduit, first fluid outlet conduit and second fluid outlet conduit of the pressure relief valve. The, or each, switch can be configured to allow or prevent fluid flow according to the state of the pressure relief valve. In use fluid circulating through a fluid circuit of a condensing boiler will flow into the pressure relief valve assembly fluid inlet conduit and out of the first fluid outlet conduit under acceptable operating pressures of the fluid circuit. If the pressure relief valve assembly is actuated due to a build-up of dangerous or unacceptable pressure within the fluid circuit of a condensing boiler, one or more switches will activate to divert flow of fluid to the second fluid outlet of the pressure relief valve assembly and into a sump of the condensing boiler.

Embodiments of the invention will now be described, by way of example only, with reference to the accompanying drawings, in which;
Figure 1 is a schematic view of a condensing boiler in accordance with the first aspect of the invention;
Figure 2 is a perspective view of a pressure relief valve assembly of the second aspect of the invention, connected to a fluid circuit and sump of a condensing boiler;
Figure 3 is a cross-sectional perspective view of the pressure relief valve assembly of Figure 2 connected to a condensing boiler; and
Figure 4 illustrates a cross-sectional side view of a pressure relief valve used in the condensing boiler of Figures 1-3.

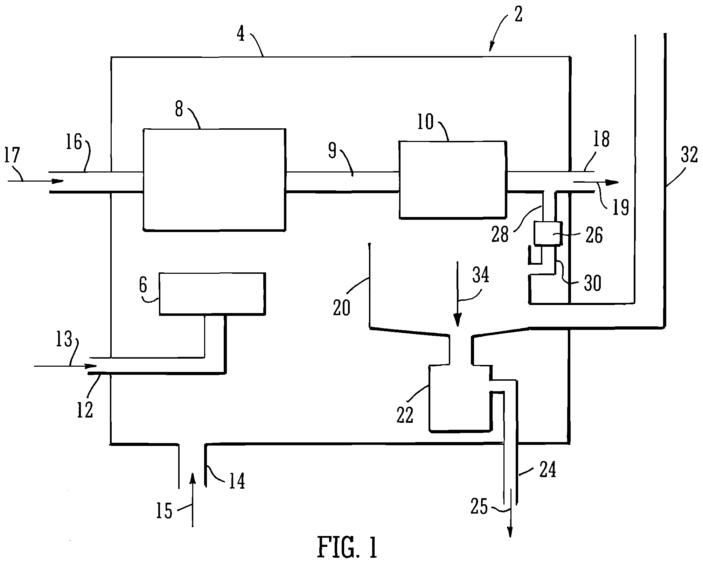

A condensing boiler 2 having a main casing 4 is mounted to the inside surface of a building (not shown). The condensing boiler 2 includes a burner 6 and a heat exchanger system in the form of a first heat exchanger 8 and a second heat exchanger 10. The burner 6, is connected to a fuel pipe 12, through which fuel flows in the direction of arrow 13. The casing 4 further comprises an air inlet 14 through which air flows in the direction of arrow 15, so that fuel and air may be mixed within the burner 6, in order for combustion to occur. The burner 6 may include a fan (not shown) which blows the mixture of fuel and air into the boiler 2, where it burns and produces combustion products in the form of hot flue gases. The hot flue gases pass through either a single condensing heat exchanger or as shown in Figure 1 the first heat exchanger 8, and second heat exchanger 10 before exiting the boiler 2 via a flue 32. The boiler 2 includes a fluid circuit comprising a fluid inlet 16, into which a fluid flows in the direction of arrow 17, and a fluid outlet 18, out of which flows heated fluid in the direction of arrow 19. The fluid circuit 9 passes through the first heat exchanger 8, so that heat from the flue gasses is transferred from the flue gasses to the fluid. The fluid then proceeds through the fluid circuit to the second heat exchanger 10, where latent heat is extracted from the flue gasses, in order to further heat the fluid, before the fluid exits the boiler 2 via the fluid outlet 18. The fluid is generally water. The heated fluid may be used for any suitable purpose, such as for domestic or commercial hot water or for a central heating radiator system, for example.

The fluid circuit may comprise copper pipes, and the heat exchangers 8 and 10 may comprise an aluminium casting or other conducting metal block. The water may pass through these directly or through copper pipes in an internal matrix.

As the flue gasses pass through the first heat exchanger 8 and second heat exchanger 10 water vapour present in the flue gasses condenses and the water condensate runs through the heat exchangers 8, 10 in the direction of arrow 34, to a sump 20. The sump is connected to a condensate trap 22, which in turn is connected to a condensate discharge pipe 24 through which condensate can exit the boiler 2 in the direction of arrow 25. Connected to the fluid circuit 9 and sump 20 is a pressure relief valve 26. The pressure relief valve 26 is connected to the fluid circuit via fluid circuit connector 28 and to the sump 20 via sump connector 30.

In use, the pressure relief valve 26 is arranged to remain inoperative, if the pressure within the fluid circuit 9 is at an acceptable level and fluid will circulate normally through the fluid circuit 9 and out of the condensing boiler 2 via outlet 19. As soon as the pressure within fluid circuit 9 increases to an unacceptable or dangerous level, the pressure relief valve 26 will actuate to direct the flow of fluid from the fluid circuit 9, through connectors 28 and 30, and into the sump 20, thereby relieving the pressure of the fluid within the fluid circuit 9. If the pressure within the fluid circuit 9 drops to an acceptable level, then the pressure relief valve 26 may actuate and fluid resumes its flow through fluid circuit 9, and fluid outlet 18.

The condensing boiler 2 is a sealed system, within which all of the components of the boiler 2 are present within the casing 4. The pressure relief valve 26 is also located within the sealed system, and can be connected to the fluid circuit 9, and sump 20 without the need for additional pipework. The internal location of the pressure relief valve 26 also enables an installer or service engineer to install the condensing boiler 2 of the invention, without the need to install further pipework, either within or without the casing 4, therefore reducing the installation time, and removing the need to drill further pipework channels through a building to which the boiler 2 is connected. An installer can also determine quickly whether the pressure relief valve 26 is malfunctioning or weeping, by removing the boiler casing 4, or an access panel thereof (not shown). According to the invention the sump 20 is provided with a sump cover (not shown) which can be removed from the sump 20 in order to determine whether the pressure relief valve is weeping or faulty.

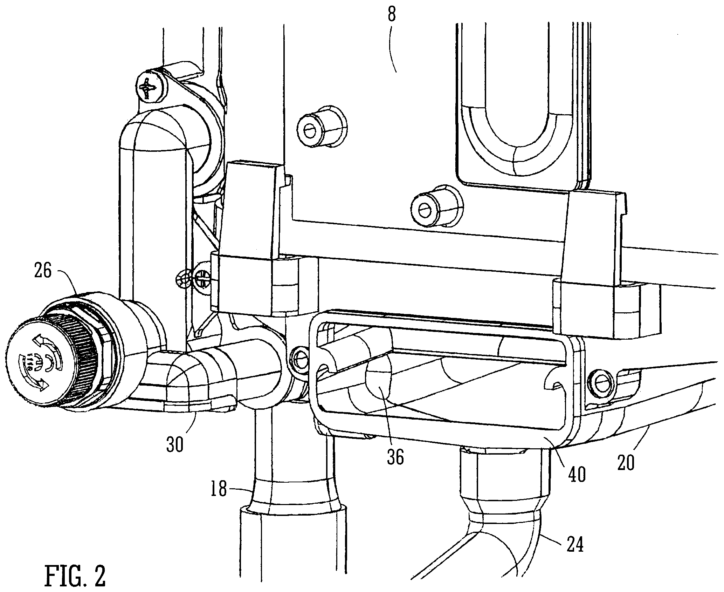

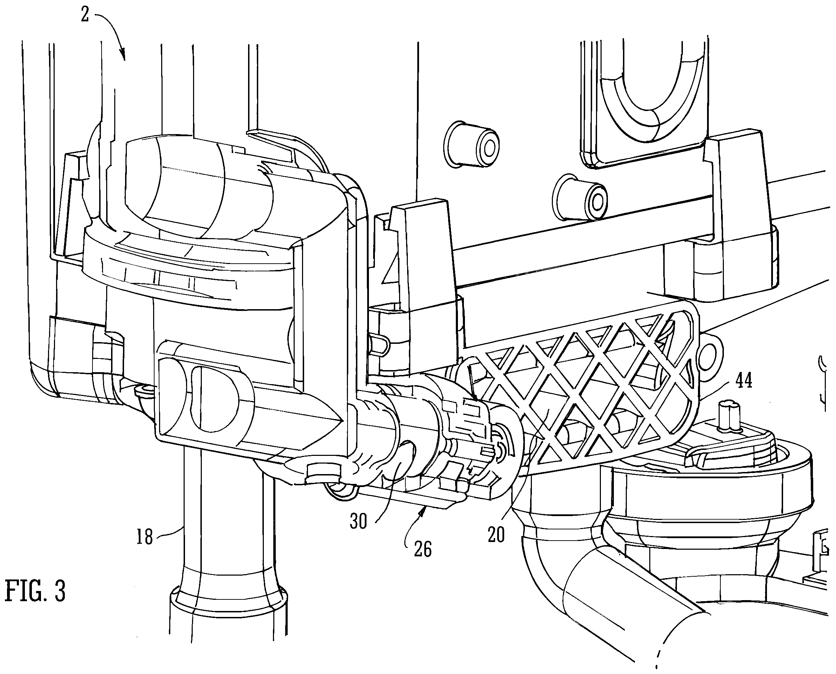

An example of a pressure relief valve assembly of the second aspect of the invention is shown in perspective view in Figure 2, connected to a condensing boiler 2. Like numerals describe like components. The pressure relief valve 26 is connected to the fluid circuit of the condensing boiler 2 by way of a fluid circuit connector and is also connected to a sump 20, by way of sump connector 30. The sump connector 30 opens into the sump 20 by way of a discharge outlet 36. The sump 20 includes a cover connecting surface 40, onto which is connected a cover 44 as shown in Figure 3. An installer or service engineer may remove the cover 44, in order to gain access to the sump 20, or view the sump 20 through the cover if made of a transparent material 44 and determine any weeping or discharge coming though discharge outlet 36.

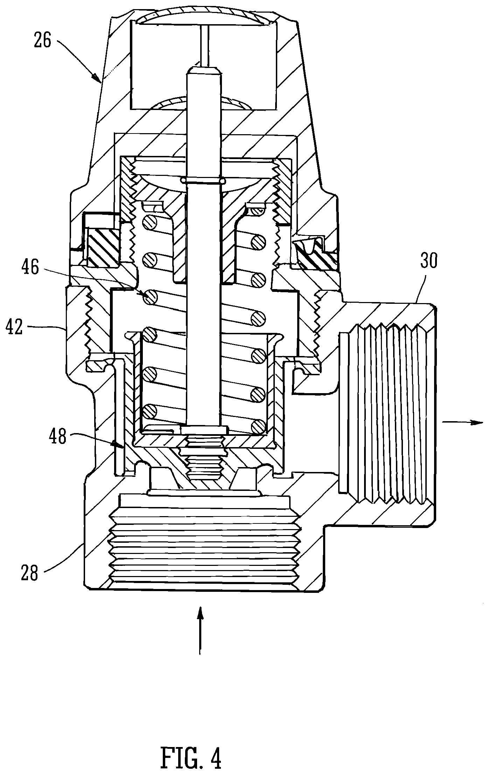

Figure 4 illustrates a cross-sectional side view of a pressure relief valve 26 used in the condensing boiler 2 shown in Figures 1-3. The valve 26 includes a casing 42 onto which connectors 28,30 are connected to provide fluid outlets to the central heating system and sump 20 respectively. The valve 26 has an internal spring 46 and a rubber diaphragm 48. The diaphragm 48 is urged by the spring 46 to close the valve to fluid flow entering the connector 30 under safer fluid pressures. When the fluid pressure against the diaphragm 48 becomes too great, this forces compression of the spring 46 and the diaphragm 48 is lifted to allow fluid into the casing 42 and through the connector 30 to the sump 20.

In use, the pressure relief valve 26, monitors the pressure within the fluid circuit, via pressure of fluid entering the fluid circuit connector 28. If the pressure of the fluid within the fluid circuit builds up to an unacceptable or dangerous level, the pressure relief valve 26 actuates and the diaphragm 48 lifts, to divert fluid from the fluid circuit connector through to sump connector 30, and out of the discharge outlet 36 into the sump 20. The water discharged into the sump 20 will be immediately removed from the boiler 2 via the condensate outlet 24 and to a drain or soakaway outside of the building in which the boiler 2 is installed. When normal pressures return, the diaphragm lowers to close the casing 42 to further water ingress, and the condensing boiler 2 can run normally.

As can be seen from Figures 1 to 3, an advantage of the condensing boiler 2 and pressure relief valve assembly 26 of the invention is the ability for the pressure relief valve 26 to be installed to existing connections and pipes on the heat exchanger or fluid circuit 9 in order to reduce installation complexity and reduce the number of components needed. A further advantage of the pressure relief valve 26 and boiler 2 of the invention is the lack of necessity for further external pipework extending from the boiler, and any subsequent need to drill further pipework channels into any brickwork, wall or other surface to which the boiler 2 is attached. Finally, a further advantage of the boiler 2 and pressure relief valve 26 of the invention is the ability for a service engineer or installer to view malfunctions or weeping from the pressure relief valve 26, through a detachable, or transparent cover 44.

Whereas the invention has been described in relation to what is presently considered to be the most practical and preferred embodiments, it is to be understood that the invention is not limited to the disclosed arrangements but rather is intended to cover various modifications and equivalent constructions included within the scope of the invention as defined by the claims herein. In this respect, it should also be noted that the invention can be applied to condensing boilers having different constructions from that shown in the preferred embodiment.

Where the terms "comprise", "comprises", "comprised" or "comprising" are used in this specification, they are to be interpreted as specifying the presence of the stated features, integers, steps or components referred to, but not to preclude the presence or addition of one or more other feature, integer, step, component or group thereof.

## Claims

1. A condensing boiler (2) comprising a combustion chamber, heat exchanger, a fluid circuit connected to the heat exchanger and comprising an inlet (16) for fluid to be heated and an outlet (18) for heated fluid, an exhaust flue (32) for exhausting combustion products from the combustion chamber, and a sump (20) for collecting condensed water vapour from combustion products, wherein the condensing boiler (2) further comprises a pressure relief valve (26) operatively connected to the fluid circuit and the sump (20), the pressure relief valve (26) comprises an exhaust port directly coupled to the sump (20), **characterized in that** the sump (20) comprises a cover (44) which is detachable or includes means to allow viewing of the sump (20) through the cover (44) in order to view the exhaust port of the pressure relief valve (26).

2. A condensing boiler (2) as claimed in claim 1 wherein the heat exchanger comprises a first heat exchanger (8) for extraction and transfer of heat from combustion products to the fluid circuit, and a second heat exchanger (10) for extracting latent heat from combustion products.

3. A condensing boiler (2) as claimed in claim 1 or 2 wherein the pressure relief valve (26) is connected to the fluid inlet (16) or fluid outlet (18) of the fluid circuit.

4. A condensing boiler (2) as claimed in any one of claims 1 to 3 wherein the pressure relief valve (26) is located adjacent to a connector (28) on the heat exchanger.

5. A condensing boiler (2) as claimed in any preceding claim wherein the sump (20) is connected to a condensate trap (22).

6. A condensing boiler (2) as claimed in claim 5 further comprising control means configured to control discharge of condensate from the condensate trap (22).

## Patentansprüche

1. Brennwertkessel (2), umfassend eine Brennkammer, einen Wärmetauscher, einen Fluidkreislauf, der mit dem Wärmetauscher verbunden ist und einen Einlass (16) für zu erwärmendes Fluid und einen Auslass (18) für erwärmtes Fluid aufweist, einen Abgaszug (32) zum Ablassen von Verbrennungsprodukten aus der Brennkammer, und einen Sammelbehälter (20) zum Sammeln von kondensiertem Wasserdampf aus Verbrennungsprodukten, wobei der Brennwertkessel (2) ferner ein Druckbegrenzungsventil (26) umfasst, das mit dem Fluidkreislauf und dem Sammelbehälter (20) wirkverbunden ist, wobei das Druckbegrenzungsventil (26) eine direkt mit dem Sammelbehälter (20) gekoppelte Auslassöffnung umfasst, **dadurch gekennzeichnet, dass**
der Sammelbehälter (20) eine Abdeckung (44) umfasst, die abnehmbar ist oder
Mittel enthält, um das Betrachten des Sammelbehälters (20) durch die Abdeckung (44) zu ermöglichen, um die Auslassöffnung des Druckbegrenzungsventils (26) zu betrachten.

2. Brennwertkessel (2) nach Anspruch 1, wobei der Wärmetauscher einen ersten Wärmetauscher (8) zur Extraktion und Übertragung von Wärme aus Verbrennungsprodukten in den Fluidkreislauf und einen zweiten Wärmetauscher (10) zur Extraktion von latenter Wärme aus Verbrennungsprodukten umfasst.

3. Brennwertkessel (2) nach Anspruch 1 oder 2, wobei das Druckbegrenzungsventil (26) mit dem Fluideinlass (16) oder Fluidauslass (18) des Fluidkreises verbunden ist.

4. Brennwertkessel (2) nach einem der Ansprüche 1 bis 3, wobei das Druckbegrenzungsventil (26) angrenzend an einen Verbinder (28) am Wärmetauscher angeordnet ist.

5. Brennwertkessel (2) nach einem der vorhergehenden Ansprüche, wobei der Sammelbehälter (20) mit einer Kondensatfalle (22) verbunden ist.

6. Brennwertkessel (2) nach Anspruch 5, ferner umfassend Steuermittel, die konfiguriert sind, um die Ableitung von Kondensat aus der Kondensatfalle (22) zu steuern.

## Revendications

1. Chaudière (2) de condensation comprenant une chambre de combustion, un échangeur de chaleur, un circuit de fluide communiquant avec l'échangeur de chaleur et comprenant une entrée (16) pour du fluide à chauffer et une sortie (18) pour du fluide chauffé, un conduit (32) d'évacuation pour évacuer des produits de combustion de la chambre de combustion, et un puisard (20) pour collecter de la vapeur d'eau condensée provenant des produits de combustion, la chaudière (2) à condensation comprenant en outre une soupape (26) de détente de la pression reliée fonctionnellement au circuit de fluide et au puisard (20), la soupape (26) de détente de la pression comprenant un orifice d'échappement relié directement au puisard (20),
**caractérisée en ce que**
le puisard (20) comprend un couvercle (4) qui peut être détaché ou comprend des moyens pour permettre de voir le puisard (20) à travers le couvercle (4) afin de voir l'orifice d'évacuation de la soupape (26) de détente de la pression.

2. Chaudière (2) de condensation suivant la revendication 1, dans laquelle l'échangeur de chaleur comprend un premier échangeur de chaleur (8) d'extraction et le transfert de la chaleur des produits de combustion au circuit de fluide et un deuxième échangeur de chaleur (10) d'extraction de la chaleur latente des produits de combustion.

3. Chaudière (2) de condensation suivant la revendication 1 ou 2, dans laquelle la soupape (26) de détente de la pression est reliée à l'entrée (16) de fluide ou à la sortie (18) de fluide du circuit de fluide.

4. Chaudière (2) de condensation suivant l'une quelconque des revendications 1 à 3, dans laquelle la soupape (26) de détente de la pression est placée au voisinage d'un raccord (28) sur l'échangeur de chaleur.

5. Chaudière (2) de condensation suivant l'une quelconque des revendications précédentes, dans laquelle le puisard (20) est relié à un puits (22) de condensat.

6. Chaudière (2) de condensation suivant la revendication 5, comprenant en outre des moyens de commande configurés pour commander l'évacuation de condensat du puits (22) de condensat.
